# EUROPEAN PATENT SPECIFICATION

(11) **EP 2 658 732 B1**
(45) Date of publication and mention of the grant of the patent: **03.04.2019**
(21) Application number: 10814656.4
(22) Date of filing: 29.12.2010
(51) Int. Cl.: B60C 11/03

(54) **AGRICULTURAL TYRE**
LANDWIRTSCHAFTSREIFEN
PNEU AGRICOLE

(43) Date of publication of application: 06.11.2013
(73) Proprietor: Pirelli Tyre S.p.A., 20126 Milano (IT)
(72) Inventor: ZUCATO, Igor, 09111-310 Santo André - SP (BR); CAETANO, José Carlos, Santo André, San Paolo (BR); CARRA, Alberto, I-20126 Milano (IT)
(74) Representative: Fiammenghi, Eva
(86) International application number: PCT/IB2010/003357
(87) International publication number: WO 2012/090014

(56) References cited:
- AT-B- 188 238
- JP-A- 58 152 604
- US-A- 4 131 148
- US-B1- 6 386 652

## Description

### FIELD OF THE INVENTION

The present invention relates to pneumatic tyres adapted to be used on agricultural and/or industrial tractors, or on other similar or comparable vehicles intended to operate on crumbly, slippery and/or muddy soil.

### BACKGROUND ART

In order to be suitable for the above mentioned uses, tractor or agricultural tyres are provided with a tread characterized by the presence of lugs of relevant height projecting from the tread surface.

During the use, particularly on crumbly, slippery and/or muddy soil, the lugs of the tread pattern sink more or less completely in the ground to insure traction. It follows that the traction capability of the tyre is affected both by the self-cleaning ability of the tread, which influences the penetration of the lugs in the ground, and by the possibility, for each lug, to maintain as high as possible the level of penetration in the ground, in terms of time and height, during the passage in the contact area between the tyre and the ground.

The US patent no. 4131148 discloses a pneumatic tyre according to the preamble of claim 1 for agricultural and industrial tractors having a tread of the type having a plurality of lugs arranged in succession along the tyre circumference in two contiguous series offset with respect to the equatorial plane of the tyre, the lugs of each series extending obliquely from the tread edges towards the equatorial plane and being longitudinally spaced apart from one another by a distance ranging between 1.5 and 6 times the longitudinal width of the lugs, characterized in that the tyre comprises corners extending at least on the tread surface between two adjacent lugs, the portion of the profile between every two contiguous corners, defined by the tyre section taken with a plane parallel to the lugs, being concave or, at the limit, rectilinear.

The US patent no. 6401774 relates to a pneumatic all-terrain vehicle tyre having puncture prevention pads. In more detail, the tread has a plurality of elongated pads extending radially outwardly from the inner tread, and each elongated pad is oriented in a direction substantially parallel to the centrelines of circumferentially adjacent lugs. Each pad has a base width Z as measured from the inner tread and a radial height X also being measured from the inner tread. Z is at least three times greater than X. The longitudinal sides of the elongated pads have a slope of 30° or less as measured from the inner tread surface, preferably about 20° or less. The radial height is less than 0.2 inches (5 mm).

The US patent no. 6536490 relates to a pneumatic all-terrain vehicle tyre having an inner tread with a textured surface projecting from the inner tread. The textured surface can be arranged in a mosaic pattern. The mosaic pattern has directionally oriented polygonal shapes elongated relative to the direction of flow, i.e. the direction in which soil or mud is discharged through soil discharge channels formed by an inner tread portion and two or more lugs. Each of the polygonal shapes forming the textured surface has a peripheral boundary projecting less than 4 mm. The average length to width ratio of the polygonal shapes forming the mosaic pattern is at least 2 to 1.

### SUMMARY AND DISCLOSURE OF THE INVENTION

The Applicant has found that the self-cleaning capability of a tyre adapted for agricultural and/or tractor use is greatly improved by decreasing in the direction of the tread shoulders, the radial height of a tread surface portion/s located between two circumferentially consecutive lugs.

In fact, it is often the case that during the rotation of the tyre and the working of the lugs within the terrain, crumbly, slippery and/or muddy soil portions can become entrapped between the lugs.

This decreasing arrangement in the direction of the tread shoulder portions, of the tread surface portion/s which is located between two circumferentially consecutive lugs results, in fact, in an improved facilitation of discharging the possibly entrapped terrain, crumbs or mud, through the shoulder portions of the tyre.

Moreover, such a decreasing arrangement increases the penetration of the lugs in the ground, therefore improving the traction capability of the tyre, in particular at the shoulder portions.

At the same time, the Applicant has noted that generally it is not possible to increase the traction capability of the tyre by increasing the radial height of lugs, i.e. their depth with respect to the inner tread, without adversely affecting in some way the flexion stress resistance of the lugs.

The Applicant has noted that the higher the flexion stress the lug is put under, the higher the breaking probability of the lug, so that the possibility of damage to the tyre is increased.

The Applicant has however found that at the shoulder tyre portions, it is possible to increase the traction capability of the tyre without adversely affecting the flexion stress resistance of the lugs, by changing and controlling the radial height of the tread surface portion/s located between two circumferentially consecutive lugs in such a way to provide decreased radial height where the lugs are under greater flexion stress.

The invention is defined by a pneumatic tyre according to claim 1. Preferred embodiments are defined by the dependent claims.

In an aspect, the present invention relates to a pneumatic tyre, comprising a carcass structure and a tread disposed in a radially outer position with respect to said carcass structure. The tread comprises an inner tread and a plurality of spaced lugs outwardly projecting from said inner tread.

The spaced lugs extend in a transverse direction substantially from a central portion towards shoulder portions of the tread.

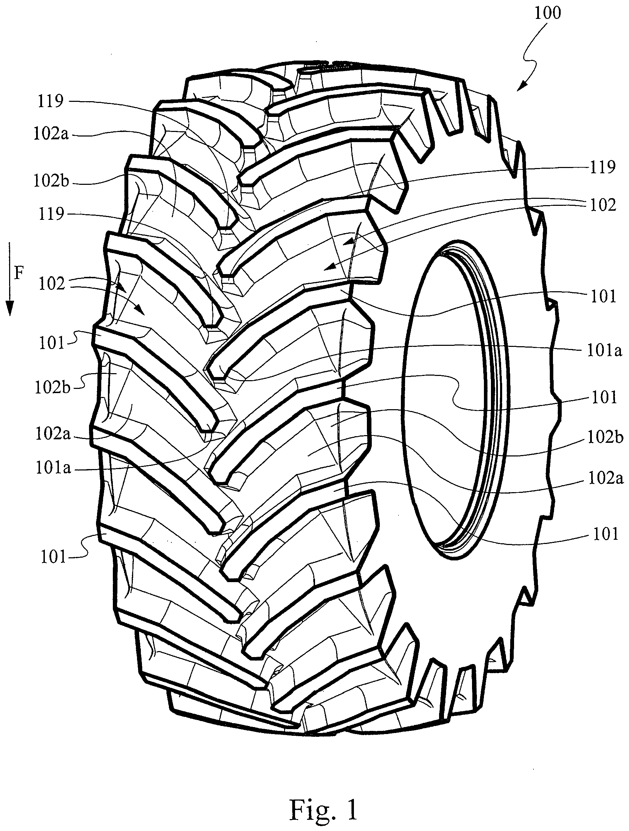

A portion of the inner tread comprised between a first and a second lug, circumferentially consecutive, comprises at least a first axially-inner surface and a second axially-outer surface. The first and the second lug are the first, respectively the second, entering in the tyre contact area, during the rotation of the tyre, in the sense of the tyre rotation (indicated by arrow F in figures 1,2,4). The first axially-inner surface and the second axially-outer surface are axially adjacent.

The second axially-outer surface is disposed at least partially at different radial height with respect to the first axially-outer surface.

In particular, the second axially-outer surface is positioned in accordance with different radial heights, in such a way as to have a minimum radial height towards the second lug and a maximum radial height towards the first lug.

The radial height of the second axially-outer surface decreases in the direction of the tread shoulder portions. Furthermore, the portion of the inner tread comprised between the spaced first and second lug forms the surface from which the spaced lugs project.

For the purposes of the present invention, the expression "radial height" refers to a distance measured in radial direction from the rotation axis of the tyre. The radial height of an inner tread surface in a given point thereof is thus the distance between such point and the rotation rotation.

In the remainder of the present description and in the following claims, moreover, the expression "tyre contact area" is understood as meaning the portion of the peripheral surface of the tread band in contact with the road surface.

For the purposes of the present invention, the terms "axial" and "axially" are used to indicate a direction substantially perpendicular to the equatorial plane of the tyre, namely a direction substantially parallel to the axis of rotation of the tyre.

The terms "circumferential" and "circumferentially" are used to indicate a direction substantially parallel to the equatorial plane of the tyre along the annular extension of the tyre.

Moreover, in the remainder of the present description and in the following claims, the measurements of linear quantities (distances, lengths, etc.) and/or surfaces are understood as referring to the layout of the tread pattern.

In one or more preferred aspects, the present invention may comprise one or more of the characteristic features indicated below.

The second axially-outer surface is circumferentially positioned in accordance with decreasing radial heights at least in the direction of the second lug.

The exact dimensions and shape of the second axially-outer surface may depend on the size of the tyre.

However, the dimensions and shape are chosen so as to increase a material discharging section identified between two circumferentially consecutive lugs and the inner tread, axially moving from the central portion towards the shoulder portions of the tread.

Preferably, in order to increase the traction capability of the tyre, the minimum radial height of said second axially-outer surface is positioned in close proximity to the second lug.

In a preferred embodiment, the maximum radial height of said second axially-outer surface is positioned in close proximity to the first lug.

Preferably, the difference between the maximum radial height and the minimum radial height of said second axially-outer surface is at least 4 mm, more preferably at least 10 mm.

Preferably, the difference between the maximum radial height and the minimum radial height of said second axially-outer surface is lower than 40 m.

The above choices, concerning the dimension of the difference between maximum and minimum radial height of the second axially-outer surface, comply with different sizes of tyre.

In a preferred embodiment, the axially outer surface is positioned at the shoulder of the tyre and can extend in an axial direction of less than 0,25 times the total width L of the tread.

Advantageously, the second axially-outer surface can extend in a circumferential direction of more than 0,5 times the maximum distance D between two consecutive lugs.

For the purposes of the present invention, the "maximum distance D" may be intended, for example, as being the maximum circumferential distance between two faced walls of two circumferentially consecutive lugs.

It may be preferably provided that the radial height of the second axially-outer surface decreases, preferably continuously, in the direction of the tread shoulder portions. This may facilitate the expulsion of the mud by the action of gravity.

In a preferred embodiment, the second axially-outer surface may have a shape with at least a tapered (or diverging) portion. Preferably, the second axially-outer surface may be substantially triangular shaped.

Preferably, the second axially-outer surface is substantially triangular shaped with the minimum and the maximum radial heights placed in vertices of the triangle.

Advantageously, at least one of said first axially-inner and said second axially-outer surface may be a substantially planar surface.

In preferred embodiments, the walls of the lugs comprise at least one substantially planar wall portion. Edges may be formed at the intersection of planar wall portions forming the walls of the lugs.

In preferred embodiments, the head end of the lugs disposed substantially at the central portion of the tread has a polygonal contour, for example a regular polygonal contour.

Advantageously the head end of the lugs may comprise at least a chamfered portion with respect to a radially outermost portion of the lugs.

### BRIEF DESCRIPTION OF THE DRAWINGS

Further features and advantages of the tyre of the present invention shall become clearer from the following detailed description of exemplary embodiments thereof, made with reference to the attached drawings given just as nonlimiting examples. In such drawings:
- figure 1 shows a perspective view of an embodiment of a tyre according to the present invention;
- figure 2 shows a front view of the embodiment of figure 1;

- figure 3 shows a transverse section of an embodiment of a tyre according to the present invention;
- figure 4 shows an enlarged portion of the front view of figure 2;
- figure 5 shows a lateral view of an inner tread portion of the tyre of figures 1, 2, 4 located between two circumferentially consecutive lugs; and
- figure 6 shows a partial section taken along the line A-A of the tyre of figure 4.

### - DETAILED DESCRIPTION OF EXEMPLARY EMBODIMENTS OF THE INVENTION

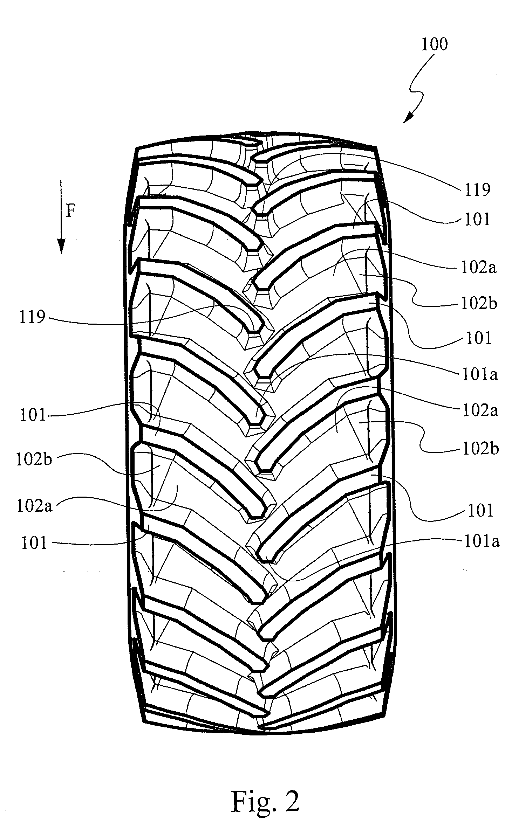

Figures 1 and 2 show two plain views of an exemplary agricultural tyre 100 according to an embodiment of the invention.

The tyre 100 has a tread comprising a plurality of spaced lugs 101. The lugs 101 obliquely extend from the central portion of the tread (at or close to the equatorial plane of the tyre) to the shoulder portions of the tyre. In particular, the lugs are divided in two series which alternate on opposite sides with respect to the equatorial plane of the tyre along the tyre circumference.

Inner tread portions 102 are located between the lugs 101. In practice, the inner tread portions 102 form the surface of the tread from which the spaced lugs 101 project. Typically, in an agricultural tyre the space between two consecutive lugs is quite relevant. The width of the inner tread portions 102, as measured in circumferential direction, may be at least equal to about the width of the lugs 101, and is preferably comprised in a range from 1 to 6-10 times the width of the lugs 101 (taken in the radially outermost portion thereof).

The inner tread portions 102 located between the lugs 101 are divided in two axially adjacent surfaces. In particular with respect to the embodiment of figures 1-4 a first axially-inner surface 102a and a second axially-outer surface 102b are formed. As it will be described with higher detail in the remainder of the description, the first axially-inner surface and the second axially-outer surface comprise portions located at different radial height.

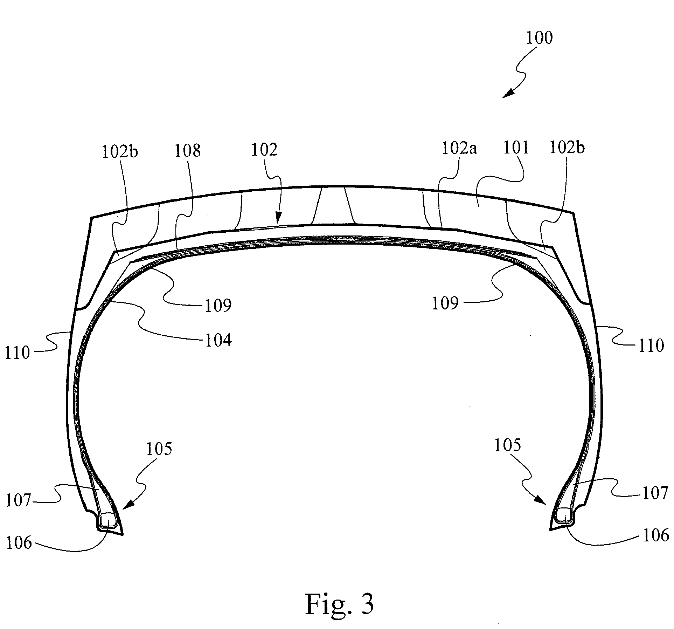

Figure 3 shows a transverse section of the agricultural tyre of figures 1 and 2.

As shown in the sectional view of figure 3, the tire 100 comprises at least a carcass structure 104 comprising at least one carcass ply. Typically, at least two carcass plies are used for most agricultural tyres. Such plies incorporate a plurality of cords.

In particular, the tyre structure shown in figure 3 has a radial carcass, in which the cords of the carcass ply or plies are disposed according to an angle substantially orthogonal to the circumferential direction of the tyre (e.g. between 70° and 110° versus the circumferential direction).

Alternatively, the carcass structure of the tyre could comprise a number of carcass plies (e.g. four carcass plies) having cords inclined with respect to the circumferential direction of the tyre, wherein each ply comprises cords having crossed orientation with respect to the cords of the adjacent ply. Typically, the cords used in the carcass structure of an agricultural tyre are textile cords, such as, for example, PA (polyamide) cords, aramide cords or PET (polyethylene terephthalate) cords.

The carcass structure 104 has opposite lateral edges associated with respective right-hand and left-hand bead structures 105, defined along an inner circumferential edge of the tire 100, with which the tire engages on a rim (not shown) forming part of a vehicle wheel.

In the embodiment shown in figure 3 the bead structures 105 comprise a bead core 106 and a bead filler 107; the ends of the ply or plies of the carcass structure are folded around the bead core 106 and the bead filler 107 so as to form the so-called carcass turn up.

The tread band comprising the spaced lugs 101 and the inner tread portions 102 is applied in a radially external position with respect to the carcass structure 104. Typically, in an agricultural tyre the lugs 101 project from the inner tread surface with a relevant height, for example comprised between about 20 and about 120 mm, depending on the size of the tyre.

Sidewalls 110 are laterally applied on opposite sides with respect to said carcass structure 104.

In the case of tubeless tyres, a rubber layer generally known as a liner, which provides the necessary impermeability to the inflation air of the tyre, is also typically provided in an inner position relative to the carcass structure 104.

Particularly in a radial tyre, a belt structure 108 is applied along the circumference of the carcass structure 104, in a radially outer position thereof.

The belt structure 108 generally comprises a plurality of radially superposed belt layers. Preferably, the belt structure comprises at least four belt layers. Each belt layer incorporates a plurality of reinforcing elements. Such reinforcing elements could be metal (e.g. steel) cords. In an agricultural tyre, textile cords may also be used, such as, for example, PA (polyamide) cords, aramide cords or PET (polyethylene terephthalate) cords.

The reinforcing elements are parallel to each other in each layer and inclined with respect to the equatorial plane of the tyre, of an angle preferably ranging between 10° and 40°. The reinforcing elements of each layer have a crossed orientation with respect to the reinforcing elements of the adjacent layer.

An insert 109 is further located at the edges of the belt structure 108, in the area where the lateral edges of the tread band connect with the sidewalls 110. Usually, the inserts 109 are interposed between the carcass structure 104 and the belt structure 108, to support the edges of the latter.

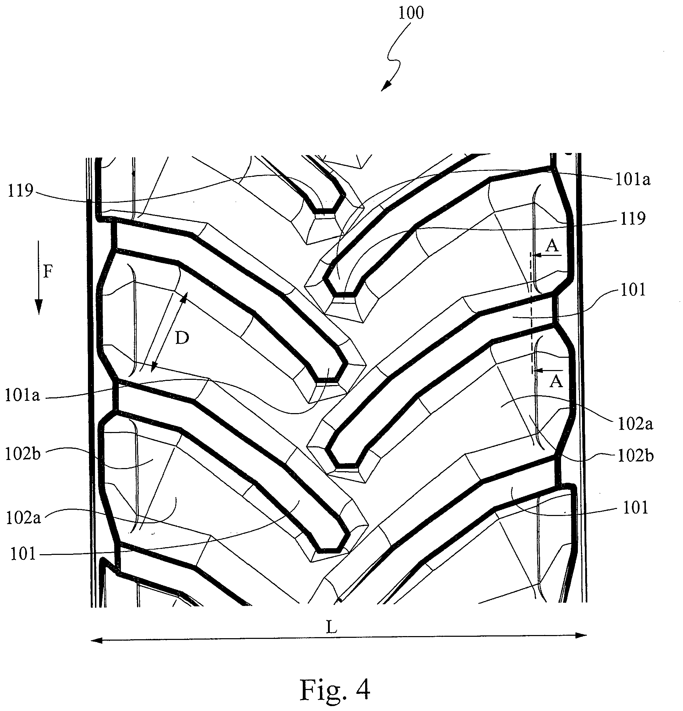

Figure 4 shows an enlarged portion of the front view of the tread band of the tyre 100 shown in figure 2. In the exemplary embodiment shown in figure 4, the spaced lugs 101 are formed by a plurality of portions having straight radially outer profiles disposed at a respective inclination angle with respect to the equatorial plane of the tyre. In radial direction, the walls of the lugs 101 comprise edges, which form at the intersection between two planar wall portions extending, in radial direction, from the respective radially outer straight profile portion.

A head portion 101a forms the end of each lug 101 located in the central portion of the tread. In the embodiment shown, the head portion 101a is located substantially at the equatorial plane of the tyre. In preferred embodiments, the head portion 101a may have the shape of a regular polygon.

The head end of the lugs 101 and in particular their head portion 101a may comprise at least one chamfered portion 119 with respect to the radially outermost portion thereof.

In the exemplary embodiment shown in figure 4, the inner tread portions located between two circumferentially consecutive lugs 101 are divided into two axially adjacent surfaces 102a,102b i.e.: a first axially-inner surface 102a and a second axially-outer surface 102b. The first axially-inner surface 102a and the second axially-outer surface 102b are axially adjacent and disposed, at least partially, at different radial heights.

In the embodiments shown, the first axially-inner and the second axially outer surface 102a, 102b are substantially planar surfaces.

Preferably, the second axially-outer surface 102b is placed at the shoulder portions of the tyre tread.

In the embodiment of figures 3-4 the first axially-inner 102a and the second axially-outer surface 102b are arranged in such a way that their radial heights decrease, preferably continuously, in the direction of the shoulder portions.

The first axially-inner 102a and the second axially-outer surface 102b are positioned in such a way that their radial heights decrease in the direction of the tyre tread shoulder portions with a different decreasing rate.

In detail, with reference to the embodiment of figures 3-4, the decreasing rate of the radial heights in at least a portion of the second axially outer surface 102b is greater than the decreasing rate of the radial heights of the first axially-inner surface 102a.

This, during the rotation of the tyre, may facilitate the expulsion of entrapped terrain, crumbs or mud, through the shoulder portions of the tyre, by the combined action of gravity and of the centrifugal force.

The centrifugal force, in fact, moves the entrapped terrain towards the shoulder portions of the tyre tread and gravity, synergically with the decreased radial height of the second axially-outer surface 102b, facilitate its expulsion.

The second axially-outer surface 102b is positioned in accordance with different radial heights in such a way as to have a minimum radial height towards the second lug 101 and a maximum radial height towards the first lug 101.

Preferably, with reference to the embodiment shown in figure 4 the minimum radial height of the second axially-outer surface 102b is in close proximity to the second lug 101 while the maximum radial height of the second axially-outer surface 102b is in close proximity to the first lug 101.

Preferably, the difference between the maximum radial height and the minimum radial height of the second axially-outer surface 102b is at least 4 mm more preferably at least 10 mm.

Preferably, the difference between the maximum radial height and the minimum radial height of the second axially-outer surface 102b is lower than 40 mm.

In preferred embodiments, the second axially-outer surface 102b is positioned so as to have circumferentially decreasing radial heights in the direction of the second lug 101.

The exact dimensions and shape of this axially-outer surface 102b may depend on the size of the tyre.

However, in order to increase the self-cleaning ability of the tyre tread the dimensions and shape of the axially-outer surface 102b are chosen so as to increase a material discharging section identified between two circumferentially consecutive lugs 101 and the inner tread 102, axially moving from the central portion towards the shoulder portions of the tyre tread.

Moreover, the dimensions and shape of the axially-outer surface 102b are chosen so as to increase a material discharging section towards the lug 101 entering afterwards in the contact area during rotation of the tyre 100. In preferred embodiments, the second axially outer surface 102b has a tapered shape, diverging towards the lug 101 entering afterwards in the contact area.

An exemplary appropriate shape for the second axially outer surface 102b may be a triangular shape.

In preferred embodiments, the second axially-outer surface 102b is substantially triangular shaped with the minimum and the maximum radial heights positioned in vertices of the triangle.

As shown in figure 4, the triangle that represents the second axially-outer surface 102b is positioned with two vertices placed in close proximity of the second (rear) lug 101 and the remaining vertex placed in close proximity of the first (front) lug 101.

The two vertices placed in close proximity of the second (rear) lug 101 are both substantially arranged in the same axial direction in such a way as to provide a maximum radial height of the second axially-outer surface 102b in the axially innermost position.

The remaining vertex placed in close proximity of the first (front) lug 101, placed an axially outer position, has a radial height which may substantially correspond to the maximum radial height of the second axially-outer surface 102b.

In preferred embodiments, as mentioned above, the axially-outer surface 102b is positioned at the shoulder portion of the tyre tread and extends, as a maximum extension, in an axial direction of less than 0,25 times the total width L of the tread. Preferably, the axially-outer surface 102b may extend in an axial direction of less than 0,15 times the total width L of the tread. The first axially inner surface 102a preferably extends over the whole remaining inner tread surface located between the equatorial plane of the tyre 100 and the second axially outer surface 102b.

In the case in which the second axially-outer surface 102b is substantially triangular shaped, the maximum extension of the latter in the axial direction is represented by the axial distance between the two vertices provided in the close proximity of the second (rear) lug 101.

Preferably, the second axially-outer surface 102b extends in a circumferential direction of more than 0,5 times the maximum distance D between two consecutive lugs.

For the purposes of the present invention, with "the maximum distance D" it may be intended, for example, the maximum distance between two faced walls of two circumferentially consecutive lugs.

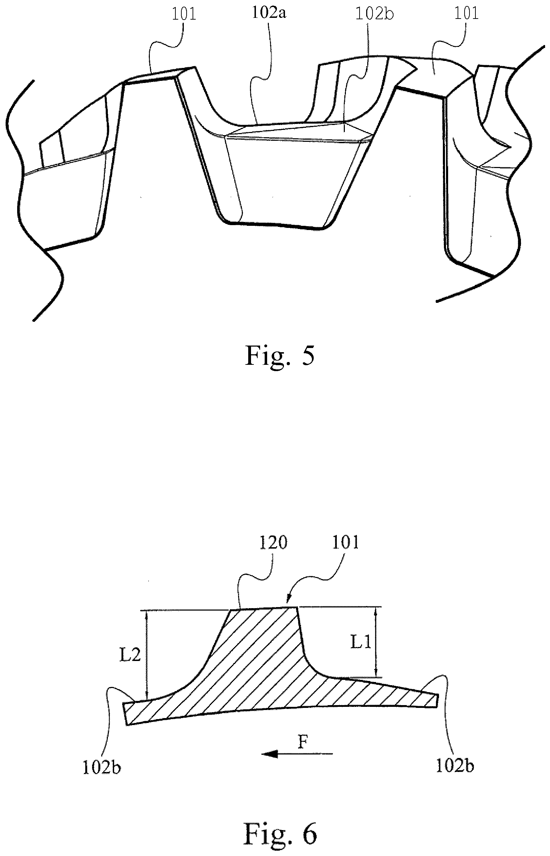

Figure 6 shows a schematic enlarged sectional view of a lug 101 formed between two circumferentially consecutive axially-inner 102a and axially outer 102b surfaces, taken along line A-A shown in figure 4.

The more radially recessed portion of the axially-outer surface 102b is positioned in proximity of the front wall of the lug 101, in the sense of rotation of the tyre (indicated by the arrow F), while the less radially recessed (or non radially recessed) portion of the axially-outer surface 102b is positioned in proximity of the rear wall of the lug 101, in the sense of rotation of the tyre.

The walls of the lug 101 have thus different heights L1 and L2 with respect to the inner tread 102.

In preferred embodiments, the first axially-inner surface 102a may be circumferentially divided into at least a first portion and a second portion. The first and the second portions of the axially-inner surface 102a are circumferentially adjacent.

Substantially at the adjacency between the first and the second portions, the first and the second portions are at least partially disposed at different radial heights, so as to form at least one transversely extending step within the axially-inner surface 102a.

Preferably, the maximum height (measured in radial direction) of the step (i.e., the difference between the radial heights of the first and the second portions at the step) is about 10 mm. More preferably, the maximum height of the step is about 5 mm.

In preferred embodiments, the height of the step decreases in direction of the tread shoulder portions.

The step does not join with the edges and/or the walls of the lugs 101.

The step introduces a discontinuity extending in transverse direction in the axially inner surface 102a. The exact dimensions of this discontinuity may depend on the size of the tyre. However, the dimensions and shape are chosen in such a manner as to create a discontinuity in the rigidity of the axially inner surface 102a located within circumferentially consecutive lugs, to create a hinge.

During the rotation of the tyre, in case mud is entrapped between the lugs 101, the discontinuity/hinge allows a slight but continuous "up and down", oscillating radial displacement of the axially-inner surface 102a, so that the mud is continuously moved. Such continuous movement hinders a firm attach of the mud itself to the tread surface, so that, eventually, the entrapped mud is discharged through the shoulder portions of the tread.

The discontinuity/hinge creates a synergy with the working of the lugs. The working of the lugs moves the terrain and, at the same time, the circumferential oscillations of the lugs induced by such working are transmitted to the inner tread surface, so as to induce a movement thereof. Here, the discontinuity/hinge determines a "line" which can run up to the whole inner tread portion between the lugs, and at which the movement induced from the lugs is concentrated and amplified, so that a firm attach of mud is effectively hindered.

In preferred embodiments, the step creates an abrupt change of the radial height in at least a portion of the axially inner surface 102a. Such abrupt change occurs in a very small circumferential portion. Such portion may have, for example, a dimension, measured in circumferential direction, of less than about 10 mm (i.e., from about 0 mm to about 10 mm), preferably of less than 5 mm.

In preferred embodiments, a transversely extending step (having features similar to those described above) may extend also in the axially outer surface 102b.

Alternatively, a transversely extending step (having features similar to those described above) may extend only in the axially outer surface 102b.

The previous description presents and discusses in detail some embodiments of the present invention; nevertheless, several changes to the described embodiments, as well as different invention embodiments are possible, without departing from the scope defined by the appended claims.

## Claims

1. A pneumatic tyre (100) comprising a carcass structure (104) and a tread disposed in a radially outer position with respect to said carcass structure (104), wherein said tread comprises an inner tread (102) and a plurality of spaced lugs (101) outwardly projecting from said inner tread (102), wherein said spaced lugs (101) extend in a transverse direction from a central portion towards shoulder portions of the tread,
wherein a first and a second of said spaced lugs (101), circumferentially consecutive, being the first, respectively the second, entering in the tyre contact area, during the rotation of the tyre (100), in the sense of the tyre rotation (F),
wherein a portion of said inner tread (102) comprised between said spaced first and second lug (101) forms the surface from which said spaced lugs (101) project,
wherein said portion of said inner tread (102) comprised between said spaced first and second lug (101) comprises at least a first axially-inner surface (102a) and a second axially-outer surface (102b) axially adjacent,
the said second axially-outer surface (102b) is disposed at least partially at a different radial height with respect to the first axially-inner surface (102a), said radial height being a distance measured in radial direction from the rotation axis of the tyre,
the said second axially-outer surface (102b) is positioned in accordance with different radial heights in such a way as to have a minimum radial height towards the second lug (101) and a maximum radial height towards the first lug (101),
the radial height of said second axially-outer surface (102b) decreases in the direction of the tread shoulder portions,
said pneumatic tyre (100) is **characterized in that** at least said second axially outer surface (102b) is a substantially planar surface, and
wherein the said lugs (101) comprise at least one substantially planar wall portion.

2. A pneumatic tyre (100) according to claim 1, wherein said second axially-outer surface (102b) is circumferentially positioned in accordance with decreasing radial heights at least in the direction of the second lug (101).

3. A pneumatic tyre (100) according to any one of the previous claims, wherein the minimum radial height of the said second axially outer surface (102b) is in close proximity to the second lug (101).

4. A pneumatic tyre (100) according to any one of the previous claims, wherein a maximum height of said second axially outer surface (102b) is in close proximity to the first lug (101).

5. A pneumatic tyre (100) according to any one of the previous claims, wherein the difference between the maximum radial height and the minimum radial height of said second axially-outer surface (102b) is at least 4 mm.

6. A pneumatic tyre (100) according to any one of the previous claims, wherein the difference between the maximum radial height and the minimum radial height of said second axially-outer surface (102b) is lower than 40 mm.

7. A pneumatic tyre (100) according to any one of the previous claims, wherein said second axially outer surface (102b) is positioned at the shoulder of the tyre (100) and extends in an axial direction of less than 0,25 times of the total width L of the tread.

8. A pneumatic tyre (100) according to any one of the previous claims, wherein the said second axially-outer surface (102b) extends in a circumferential direction of more than 0,5 times a maximum circumferential distance (D) between two consecutive lugs (101).

9. A pneumatic tyre (100) according to any one of the previous claims, wherein the said second axially outer surface (102b) has a tapered shape.

10. A pneumatic tyre (100) according to claim 9, wherein the said second axially outer surface (102b) is substantially triangular shaped with the said minimum and the said maximum radial heights positioned in the vertices of the triangle.

11. A pneumatic tyre (100) according to any one of the previous claims, wherein the said first axially inner surface (102a) and the said second axially outer surface (102b) are a substantially planar surface.

12. A pneumatic tyre (100) according to any one of the previous claims, wherein said lugs (101) comprise at least two substantially planar wall portions, forming an edge at an intersection thereof.

13. A pneumatic tyre (100) according to any one of the previous claims, wherein a head end (101a) of said lugs (101) disposed substantially at the equatorial plane of the tyre (100) has a polygonal contour.

14. A pneumatic tyre (100) according to any one of the previous claims, wherein a head end (101a) of said lugs (101) comprises at least a chamfered portion (119) with respect to a radially outermost portion of the lugs (101).

## Patentansprüche

1. Luftreifen (100) umfassend eine Karkassenstruktur (104) und eine Lauffläche, die an einer radial äußeren Position in Bezug auf die Karkassenstruktur (104) angeordnet ist, wobei die Lauffläche eine innere Lauffläche (102) und eine Vielzahl von beabstandeten Laschen (101) umfasst, die sich von der inneren Lauffläche (102) nach außen erstrecken, wobei die beabstandeten Laschen (101) sich von einem zentralen Abschnitt in einer Querrichtung zu Schulterabschnitten der Lauffläche hin erstrecken,
wobei eine erste und eine zweite der beabstandeten Laschen (101), die in Umfangsrichtung aufeinander folgen, die erste bzw. die zweite sind, die während der Drehung des Reifens (100) in der Richtung der Reifendrehung (F) in den Reifenkontaktbereich eintreten,
wobei ein Abschnitt der inneren Lauffläche (102), der zwischen den beabstandeten ersten und zweiten Laschen (101) liegt, die Oberfläche bildet, von welcher die beabstandeten Laschen (101) wegragen,
wobei der Abschnitt der inneren Lauffläche (102), der zwischen den beabstandeten ersten und zweiten Laschen (101) liegt, zumindest eine erste, axial innere Oberfläche (102a) und eine zweite, axial äußere Oberfläche (102b) umfasst, die axial benachbart sind,
wobei die zweite, axial äußere Oberfläche (102b) zumindest teilweise auf einer unterschiedlichen radialen Höhe in Bezug auf die erste, axial innere Oberfläche (102a) angeordnet ist, wobei die radiale Höhe ein Abstand ist, der in radialer Richtung von der Drehachse des Reifens gemessen wird,
wobei die zweite, axial äußere Oberfläche (102b) in Übereinstimmung mit unterschiedlichen radialen Höhen auf solche Weise positioniert ist, dass sie eine minimale radiale Höhe zu der zweiten Lasche (101) hin und eine maximale radiale Höhe zu der ersten Lasche (101) hin aufweist,
wobei die radiale Höhe der zweiten, axial äußeren Oberfläche (102b) in der Richtung der Schulterabschnitte der Lauffläche abnimmt,
wobei der Luftreifen (100) **dadurch gekennzeichnet ist, dass** zumindest die zweite, axial äußere Oberfläche (102b) eine im Wesentlichen plane Oberfläche ist, und
wobei die Laschen (101) zumindest einen im Wesentlichen planen Wandabschnitt umfassen.

2. Luftreifen (100) nach Anspruch 1, wobei die zweite, axial äußere Oberfläche (102b) in Umfangsrichtung in Übereinstimmung mit abnehmenden radialen Höhen zumindest in der Richtung der zweiten Lasche (101) positioniert ist.

3. Luftreifen (100) nach einem der vorhergehenden Ansprüche, wobei die minimale radiale Höhe der zweiten, axial äußeren Oberfläche (102b) in unmittelbarer Nähe zu der zweiten Lasche (101) liegt.

4. Luftreifen (100) nach einem der vorhergehenden Ansprüche, wobei eine maximale Höhe der zweiten, axial äußeren Oberfläche (102b) in unmittelbarer Nähe zu der ersten Lasche (101) liegt.

5. Luftreifen (100) nach einem der vorhergehenden Ansprüche, wobei die Differenz zwischen der maximalen radialen Höhe und der minimalen radialen Höhe der zweiten, axial äußeren Oberfläche (102b) zumindest 4 mm beträgt.

6. Luftreifen (100) nach einem der vorhergehenden Ansprüche, wobei die Differenz zwischen der maximalen radialen Höhe und der minimalen radialen Höhe der zweiten, axial äußeren Oberfläche (102b) weniger als 40 mm beträgt.

7. Luftreifen (100) nach einem der vorhergehenden Ansprüche, wobei die zweite, axial äußere Oberfläche (102b) an der Schulter des Reifens (100) positioniert ist und sich in einer axialen Richtung um weniger als das 0,25-Fache der Gesamtbreite L der Lauffläche erstreckt.

8. Luftreifen (100) nach einem der vorhergehenden Ansprüche, wobei die zweite, axial äußere Oberfläche (102b) sich in einer Umfangsrichtung um mehr als das 0,5-Fache eines maximalen umlaufenden Abstands (D) zwischen zwei aufeinander folgenden Laschen (101) erstreckt.

9. Luftreifen (100) nach einem der vorhergehenden Ansprüche, wobei die zweite, axial äußere Oberfläche (102b) eine sich verjüngende Gestalt aufweist.

10. Luftreifen (100) nach Anspruch 9, wobei die zweite, axial äußere Oberfläche (102b) im Wesentlichen dreieckig geformt ist, wobei die minimale und die maximale radiale Höhe in den Eckpunkten des Dreiecks liegen.

11. Luftreifen (100) nach einem der vorhergehenden Ansprüche, wobei die erste, axial innere Oberfläche (102a) und die zweite, axial äußere Oberfläche (102b) im Wesentlichen plane Oberflächen sind.

12. Luftreifen (100) nach einem der vorhergehenden Ansprüche, wobei die Laschen (101) zumindest zwei im Wesentlichen plane Wandabschnitte umfassen, die eine Schnittkante davon bilden.

13. Luftreifen (100) nach einem der vorhergehenden Ansprüche, wobei ein Kopfende (101a) der Laschen (101), das im Wesentlichen in der Äquatorialebene des Reifens (100) liegt, eine vieleckige Kontur aufweist.

14. Luftreifen (100) nach einem der vorhergehenden Ansprüche, wobei ein Kopfende (101a) der Laschen (101) zumindest einen abgeschrägten Abschnitt (119) in Bezug auf einen radial äußersten Abschnitt der Laschen (101) umfasst.

## Revendications

1. Pneumatique (100) comprenant une structure de carcasse (104) et une bande de roulement disposée dans une position radialement externe par rapport à ladite structure de carcasse (104), où ladite bande de roulement comprend une bande de roulement interne (102) et une pluralité de barrettes espacées (101) faisant saillie vers l'extérieur à partir de ladite bande de roulement interne (102), où lesdites barrettes espacées (101) s'étendent dans une direction transversale à partir d'une partie centrale vers des parties d'épaulement de la bande de roulement,
dans lequel des première et deuxième barrettes desdites barrettes espacées (101), consécutives sur la circonférence, étant la première, respectivement la deuxième, à entrer dans la zone de contact avec le pneu, pendant la rotation du pneu (100), dans le sens de la rotation du pneu (F),
dans lequel une partie de ladite bande de roulement interne (102) comprise entre lesdites première et deuxième barrettes espacées (101) forme la surface à partir de laquelle lesdites barrettes espacées (101) font saillie,
dans lequel ladite partie de ladite bande de roulement interne (102) comprise entre lesdites première et deuxième barrettes espacées (101) comprend au moins une première surface axialement interne (102a) et une deuxième surface axialement externe (102b) axialement adjacentes,
ladite deuxième surface axialement externe (102b) est disposée au moins partiellement à une hauteur radiale différente par rapport à la première surface axialement interne (102a), ladite hauteur radiale étant une distance mesurée dans une direction radiale à partir de l'axe de rotation du pneu,
ladite deuxième surface axialement externe (102b) est positionnée en fonction de différentes hauteurs radiales de manière à avoir une hauteur radiale minimale vers la deuxième barrette (101) et une hauteur radiale maximale vers la première barrette (101),
la hauteur radiale de ladite deuxième surface axialement externe (102b) diminue dans la direction des parties d'épaulement de bande de roulement,
ledit pneumatique (100) est **caractérisé en ce qu'**au moins ladite deuxième surface axialement externe (102b) est une surface essentiellement plane, et
dans lequel lesdites barrettes (101) comprennent au moins une partie de paroi essentiellement plane.

2. Pneumatique (100) selon la revendication 1, dans lequel ladite deuxième surface axialement externe (102b) est positionnée sur la circonférence en fonction des hauteurs radiales décroissantes au moins dans la direction de la deuxième barrette (101).

3. Pneumatique (100) selon l'une quelconque des revendications précédentes, dans lequel la hauteur radiale minimale de ladite deuxième surface axialement externe (102b) est à proximité étroite de la deuxième barrette (101) .

4. Pneumatique (100) selon l'une quelconque des revendications précédentes, dans lequel une hauteur maximale de ladite deuxième surface axialement externe (102b) est à proximité étroite de la première barrette (101) .

5. Pneumatique (100) selon l'une quelconque des revendications précédentes, dans lequel la différence entre la hauteur radiale maximale et la hauteur radiale minimale de ladite deuxième surface axialement externe (102b) est d'au moins 4 mm.

6. Pneumatique (100) selon l'une quelconque des revendications précédentes, dans lequel la différence entre la hauteur radiale maximale et la hauteur radiale minimale de ladite deuxième surface axialement externe (102b) est inférieure à 40 mm.

7. Pneumatique (100) selon l'une quelconque des revendications précédentes, dans lequel ladite deuxième surface axialement externe (102b) est positionnée au niveau de l'épaulement du pneu (100) et s'étend dans une direction axiale inférieure à 0,25 fois la largeur totale L de la bande de roulement.

8. Pneumatique (100) selon l'une quelconque des revendications précédentes, dans lequel ladite deuxième surface axialement externe (102b) s'étend dans une direction circonférentielle supérieure à 0,5 fois une distance circonférentielle maximale (D) entre deux barrettes consécutives (101).

9. Pneumatique (100) selon l'une quelconque des revendications précédentes, dans lequel ladite deuxième surface axialement externe (102b) a une forme effilée.

10. Pneumatique (100) selon la revendication 9, dans lequel ladite deuxième surface axialement externe (102b) est de forme essentiellement triangulaire, lesdites hauteurs radiales minimale et maximale étant positionnées dans les sommets du triangle.

11. Pneumatique (100) selon l'une quelconque des revendications précédentes, dans lequel ladite première surface axialement interne (102a) et ladite deuxième surface axialement externe (102b) sont une surface essentiellement plane.

12. Pneumatique (100) selon l'une quelconque des revendications précédentes, dans lequel lesdites barrettes (101) comprennent au moins deux parties de paroi essentiellement planes, formant un bord à une intersection de celles-ci.

13. Pneumatique (100) selon l'une quelconque des revendications précédentes, dans lequel une extrémité de tête (101a) desdites barrettes (101) disposée essentiellement au niveau du plan équatorial du pneu (100) a un contour polygonal.

14. Pneumatique (100) selon l'une quelconque des revendications précédentes, dans lequel une extrémité de tête (101a) desdites barrettes (101) comprend au moins une partie chanfreinée (119) par rapport à une partie radialement la plus externe des barrettes (101).
